# EUROPÄISCHE PATENTANMELDUNG

(11) **EP 4 327 959 A1**
(43) Veröffentlichungstag der Anmeldung: **28.02.2024**
(21) Anmeldenummer: 23190276.8
(22) Anmeldetag: 08.08.2023
(51) Int. Cl.: B21J 15/28, B23P 19/06, F16B 37/06

(54) **SETZEINRICHTUNG**

(30) Priorität: 22.08.2022 DE 102022121173
(71) Anmelder: Profil Verbindungstechnik GmbH & Co. KG, 61381 Friedrichsdorf (DE)
(72) Erfinder: LESKY, Benjamin, 61191 Rosbach vor der Höhe (DE); STUMPF, Andreas, 35415 Pohlheim (DE); IRMLER, Klaus, 35415 Pohlheim (DE); LEBEAU, Andreas, 61381 Friedrichsdorf (DE)
(74) Vertreter: Manitz Finsterwald Patent- und Rechtsanwaltspartnerschaft mbB

(57) **Zusammenfassung**

Die vorliegende Erfindung betrifft eine Setzeinrichtung (10) zur Befestigung eines Funktionselements (16) an einem Werkstück (18), insbesondere an einem Blechbauteil. Die Setzeinrichtung (10) umfasst eine Matrize (20) zur Aufnahme und Abstützung des Werkstücks (18), einen Setzkopf (12) mit einem mit dem Funktionselement (16) zusammenwirkenden Setzstempel (14), durch den das Funktionselement (16) in einer axialen Setzbewegung an dem Werkstück (18) befestigbar ist. Die Setzeinrichtung (10) umfasst ferner eine Überprüfungseinrichtung (22) zur Bestimmung der Qualität einer Verbindung des Funktionselements (16) mit dem Werkstück (18), wobei die Überprüfungseinrichtung einen Sensor mit einem ersten Kontaktabschnitt (24), der elektrisch leitend mit dem Funktionselement (16) kontaktierbar ist, und mit einem zweiten Kontaktabschnitt (26), der elektrisch leitend mit dem Werkstück (18) kontaktierbar ist, aufweist. Die vorliegende Erfindung betrifft zudem ein entsprechendes Verfahren zur Befestigung eines Funktionselements (16) an einem Werkstück (18).

## Beschreibung

Die Erfindung betrifft eine Setzeinrichtung zur Befestigung eines Funktionselements an einem Werkstück, insbesondere an einem Blechbauteil.

Funktionselemente sind in den verschiedensten Ausgestaltungen bekannt und kommen in vielen Bereichen zur Anwendung, z.B. in der Kraftfahrzeugtechnik. Sie werden beispielsweise an Blechbauteilen befestigt, um als Befestigungspunkte für weitere Komponenten zu dienen. Beispielhafte Funktionselemente sind Mutterelemente, die selbststanzend an Werkstücken angebracht werden. Sie können beispielsweise Elemente sein, die einen Nietabschnitt aufweisen, der bei dem Befestigungsprozess umgeformt wird, sodass ein das Element an dem Werkstück fixierender Hinterschnitt entsteht. Es gibt jedoch auch Elemente, die lediglich durch Presskräfte an dem Werkstück gehalten sind.

Solch ein Mutterelement kann beispielsweise eine Bohrung mit einem Innengewinde aufweisen, das es ermöglicht, an dem Blechteil eine Komponente zu verschrauben. Es sind jedoch auch Elemente mit glatten Bohrungen oder andersartig ausgestalteten Funktionsbereichen denkbar.

Neben mutterförmigen Funktionselementen kommen auch Bolzenelemente zum Einsatz, die einen Schaft aufweisen, der mit einem Funktionsabschnitt, beispielsweise mit einem Außengewinde, versehen sein kann.

Neben selbststanzenden Elementen sind auch Elemente bekannt, die in eine vorgefertigte Öffnung des Werkstücks eingebracht werden.

Die vorstehenden Ausführungen verdeutlichen, dass eine Vielzahl von Funktionselementen bekannt ist, die auf die unterschiedlichsten Arten an einem Werkstück befestigbar sein können und die die verschiedensten Funktionen erfüllen.

Der Prozess der Befestigung eines Funktionselements an einem Werkstück wird auch als "Setzen" bezeichnet. Hierbei kommt eine geeignete Setzeinrichtung zum Einsatz. Diese weist in der Regel eine Matrize auf, die zur Aufnahme und Abstützung des Werkstücks während des Setzprozesses vorgesehen ist. Die Setzeinrichtung weist ferner einen Setzkopf auf, der einen mit dem Funktionselement zusammenwirkenden axial beweglichen Setzstempel umfasst. Mit dem Setzstempel kann das Funktionselement mit einer axialen Setzbewegung an dem Werkstück befestigt werden.

Bei einem Setzvorgang eines selbststanzenden Funktionselements presst der Setzstempel das Element gegen ein an der entsprechenden Stelle nicht vorgelochtes Werkstück. Durch die dabei aufgebrachte Setzkraft wird ein Abschnitt des Elements in das Werkstück hineingepresst, wobei dieser aus dem Werkstück einen Butzen ausstanzt. Der Setzprozess kann vorsehen, dass das Element abschnittsweise umgeformt wird, um es an dem Werkstück zu fixieren.

Entsprechende Setzeinrichtungen sind grundsätzlich bekannt. Gleiches gilt für Setzeinrichtung für Einpresselemente und für nicht-selbststanzende Elemente.

Die Anforderungen an die Qualität der Verbindung des Funktionselements mit dem Werkstück sind in vielen Fällen sehr hoch. Sie wird bisher stichprobenartig überprüft. Eine visuelle Überprüfung der Verbindung ist zwar recht einfach durchzuführen, kann jedoch hinsichtlich bestimmter Eigenschaften der Verbindung nur eine begrenzte Aussagekraft entfalten. Eine stichprobenartige Überprüfung einzelner Verbindungen im Labor ist zeitaufwendig und teuer.

Es ist eine Aufgabe der vorliegenden Erfindung, in diesem Punkt Abhilfe zu schaffen und eine verbesserte und kostengünstige Qualitätssicherung zu ermöglichen.

Der vorliegenden Erfindung liegt der Gedanke zugrunde, die Qualität der Verbindung in der und durch die Setzeinrichtung vorzunehmen. Die Setzeinrichtung weist daher erfindungsgemäß eine Überprüfungseinrichtung auf, mit der die Qualität der Verbindung des Funktionselements mit dem Werkstück bestimmt werden kann. Die Überprüfungseinrichtung weist eine Sensoreinheit auf, die einen ersten und einen zweiten Kontaktabschnitt umfasst. Der erste Kontaktabschnitt ist elektrisch leitend mit dem Funktionselement kontaktierbar, während der zweite Kontaktabschnitt elektrisch leitend mit dem Werkstück kontaktierbar ist. Insbesondere ist der erste Kontaktabschnitt an dem Setzkopf angeordnet.

Mittels der Sensoreinheit, die beispielsweise eine Steuer- oder Messeinheit umfasst oder einer Steuer- oder Messeinheit zugeordnet ist, kann - sofern das Funktionselement und das Werkstück eine gewisse elektrische Leitfähigkeit aufweisen - mittels einer elektrischen Messung darauf geschlossen werden, wie gut die Verbindung des Funktionselements mit dem Werkstück ist. Beispielsweise kann ein über einem vorbestimmten Schwellwert liegender Widerstandswert auf eine nicht ordnungsgemäß realisierte Verbindung hindeuten. Durch die Bestimmung der Qualität der Verbindung in und mittels der Setzeinrichtung kann - falls gewünscht - jede Verbindung, die erzeugt wird, hinsichtlich ihrer Qualität überprüft werden. Die ermittelten Daten können zu Dokumentationszwecken gespeichert werden. Es ist auch möglich, dass eine der Überprüfungseinrichtung und/oder der Setzeinrichtung zugeordnete Steuereinheit neben der Durchführung der Qualitätsüberprüfung und der optionalen Dokumentation der ermittelten Ergebnisse auch ein Warnsignal ausgibt, sodass ein Werkstück mit einer fehlerhaften Verbindung gleich aussortiert werden kann. Die Steuereinheit der Setzeinrichtung kann die der Sensoreinheit zugeordnete Steuer- oder Messeinheit umfassen.

Weitere Ausführungsformen der Erfindung sind in den Ansprüchen, der Beschreibung sowie in den beigefügten Zeichnungen angegeben.

Gemäß einer vorteilhaften Ausführungsform ist der zweite Kontaktabschnitt an dem Setzkopf angeordnet. Es kann auch vorgesehen sein, dass der zweite Kontaktabschnitt an der Matrize angeordnet ist.

Durch die Nutzung der bei einer Setzeinrichtung ohnehin vorhandenen Komponenten lässt sich die Überprüfungseinrichtung auf einfache Weise realisieren.

Um vergleichbare Ergebnisse der Überprüfung bereitstellen zu können, kann vorgesehen sein, dass der erste und/oder der zweite Kontaktabschnitt mit einer vorbestimmten Kraft gegen das Werkstück pressbar sind. Durch eine wohldefinierte Kraftbeaufschlagung können reproduzierbare und vergleichbare Messdaten ermittelt werden.

Insbesondere ist eine erste Vorspanneinrichtung mit einem Vorspannelement vorgesehen, das sich an dem Setzkopfabschnitt abstützt und mit dem der erste Kontaktabschnitt gegen das Funktionselement pressbar ist. Alternativ oder zusätzlich kann eine zweite Vorspanneinrichtung mit einem Vorspannelement vorgesehen sein, das sich an dem Setzkopf oder der Matrize abstützt und mit dem der zweite Kontaktabschnitt gegen das Werkstück pressbar ist.

Ein geeignetes Vorspannelement für die erste und/oder zweite Vorspanneinrichtung ist beispielsweise ein Federelement, das in wohldefinierter Weise vorgespannt ist. Grundsätzlich ist jedoch auch denkbar, anstatt einer Vorspanneinrichtung mit einem Vorspannelement eine elektrische und/oder pneumatisch und/oder hydraulische Kraftbeaufschlagungsvorrichtung vorzusehen, durch die erste und/oder der zweite Kontaktabschnitt gegen das Funktionselement bzw. gegen das Werkstück pressbar sind. Eine Kraftbeaufschlagung kann beispielsweise auch durch den Setzkopf selbst erfolgen, insbesondere wenn dieser kraftgesteuert betreibbar ist. Auch eine Kraftbeaufschlagung durch den Setzstempel ist denkbar.

Eine Kontaktierung des Funktionselements kann beispielsweise in einer radialen Richtung erfolgen, d.h. der erste Kontaktabschnitt wirkt mit einer radialen Fläche des Funktionselements zusammen. Es ist aber auch denkbar, dass der erste Kontaktabschnitt in Richtung der Setzbewegung mit dem Funktionselement kontaktierbar ist. In diesem Fall erfolgt seine Kontaktierung zwischen dem ersten Kontaktabschnitt und dem Funktionselement in einer axialen Richtung. Grundsätzlich ist auch denkbar, dass eine zur Aufbringung der Setzkraft vorgesehene Fläche des Setzstempels (abschnittsweise) als erster Kontaktabschnitt fungiert.

Der zweite Kontaktabschnitt kann eine ringförmige Kontaktfläche aufweisen, die mit dem Werkstück in Kontakt bringbar ist. Bevorzugt umgibt die Kontaktfläche eine Achse der Setzbewegung. Mit anderen Worten: Der zweite Kontaktabschnitt kann derart ausgestaltet sein, dass er in Anlage an dem Werkstück einen Bereich umgibt, an dem das Funktionselement befestigt wird bzw. befestigt ist.

Es ist darauf hinzuweisen, dass zwei oder mehr erste Kontaktabschnitte und/oder zwei oder mehr zweite Kontaktabschnitte vorgesehen sein können, um die Qualitätsbestimmung noch aussagekräftiger zu machen. Beispielsweise kann durch eine Bestromung verschiedener Kombinationen von ersten und zweiten Kontaktabschnitten Aufschluss über eine räumliche Ausgestaltung der Verbindung zu erhalten.

Die Matrize kann einen Umformabschnitt zum Umformen eines Abschnitts des Funktionselements aufweisen. Die Setzeinrichtung kann ferner zur Befestigung eines selbststanzenden Funktionselements ausgebildet und eingerichtet sein. Beispielsweise ist sie zur Befestigung eines selbststanzenden Nietelements vorgesehen.

Wie eingangs beschrieben wurde, kann das Funktionselement ein Mutterelement oder ein Bolzenelement sein. Das Element kann einen Funktionsabschnitt aufweisen, der beispielsweise mit einem Gewinde versehen ist.

Die vorliegende Erfindung betrifft ferner ein Verfahren zum Befestigen eines Funktionselements an einem Werkstück, insbesondere an einem Blechbauteil. Dabei wird das Funktionselement mittels einer Setzeinrichtung, die bevorzugt gemäß einer der vorstehend beschriebenen Ausführungsformen ausgestaltet ist, in das Werkstück eingebracht und daran fixiert. Die Setzeinrichtung weist eine Überprüfungseinrichtung zur Bestimmung der Qualität einer Verbindung des Funktionselements mit dem Werkstück auf. Mittels dieser Überprüfungseinrichtung wird nach dem Fixieren des Funktionselements an dem Werkstück ein elektrischer Parameter bestimmt, der ein Maß für eine Qualität der Verbindung des Funktionselements mit dem Werkstück ist. Zu diesem Zweck weist die Überprüfungseinrichtung eine Sensoreinheit mit einem ersten Kontaktabschnitt und mit einem zweiten Kontaktabschnitt auf. Der erste Kontaktabschnitt wird mit dem Funktionselement in elektrisch leitenden Kontakt gebracht, während der zweite Kontaktabschnitt mit dem Werkstück in elektrisch leitenden Kontakt gebracht wird.

Gemäß einer Ausführungsform des Verfahrens wird der erste Kontaktabschnitt vor dem Einbringen des Funktionselements in das Werkstück mit dem Funktionselement elektrisch leitend kontaktiert, insbesondere bevor ein Setzkopf der Setzeinrichtung mit dem Werkstück in mechanischen Kontakt gebracht wurde. Zusätzlich oder alternativ kann vorgesehen sein, dass der zweite Kontaktabschnitt vor dem Einbringen des Funktionselements in das Werkstück mit dem Werkstück elektrisch leitend kontaktiert wird, insbesondere bevor ein Setzkopf der Setzeinrichtung mit dem Werkstück in mechanischen Kontakt gebracht wurde oder indem der Setzkopf der Setzeinrichtung mit dem Werkstück in mechanischen Kontakt gebracht wird. In letzterem Fall wird die elektrische Kontaktierung des zweiten Kontaktabschnitts also durch eine Bewegung des Setzkopfs erzeugt.

Bevorzugt ist der elektrische Parameter, der erfindungsgemäß bestimmt wird, ein elektrischer Widerstand, der insbesondere durch eine Strommessung und/oder eine Spannungsmessung ermittelt wird.

Gemäß einer weiteren Ausführungsform wird das Funktionselement während der Bestimmung des elektrischen Parameters mit einer vorbestimmten Kraft beaufschlagt, die insbesondere kleiner ist als eine Setzkraft, die zum Einbringen und Fixieren des Funktionselements aufgebracht wird. Analoges gilt für das Werkstück. Zusätzlich oder alternativ kann das Werkstück während der Bestimmung des elektrischen Parameters mit einer vorbestimmten Kraft beaufschlagt werden, die insbesondere kleiner ist als eine Setzkraft, die zum Einbringen und Fixieren des Funktionselements aufgebracht wird.

Insbesondere wird der elektrische Parameter bestimmt, wenn eine Belastung der Verbindung zwischen dem Funktionselement mit dem Werkstück kleiner ist als die zwischen dem Funktionselement und dem Werkstück wirkenden Kräfte beim Einbringen und/oder Fixieren des Funktionselements.

Durch die vorstehend beschriebenen Maßnahmen wird vermieden, dass die Überprüfung der Verbindungsqualität ein verzerrtes Ergebnis liefert. Realitätsnäher ist es, wenn die auf die Komponenten der Verbindung bzw. die Verbindung wirkenden Kräfte im Rahmen der üblicherweise auftretenden Belastungen bzw. wirkenden Kräfte liegen. Beispielsweise sind die vorbestimmte Kraft oder die Belastung kleiner als 500 N, kleiner als 250 N oder in etwa gleich oder kleiner als 100 N.

Gemäß einer Ausführungsform des Verfahrens wird ein Abschnitt des Funktionselements zum Fixieren des Funktionselements umgeformt.

Die vorliegende Erfindung wird nachfolgend rein beispielhaft anhand vorteilhafter Ausführungsformen unter Bezugnahme auf die beigefügten Zeichnungen erläutert. Es zeigen:
- Fig. 1: eine erste Ausführungsform der erfindungsgemäßen Setzeinrichtung,
- Fig. 2: eine zweite Ausführungsform der erfindungsgemäßen Setzeinrichtung und
- Fig. 3: eine dritte Ausführungsform der erfindungsgemäßen Setzeinrichtung.

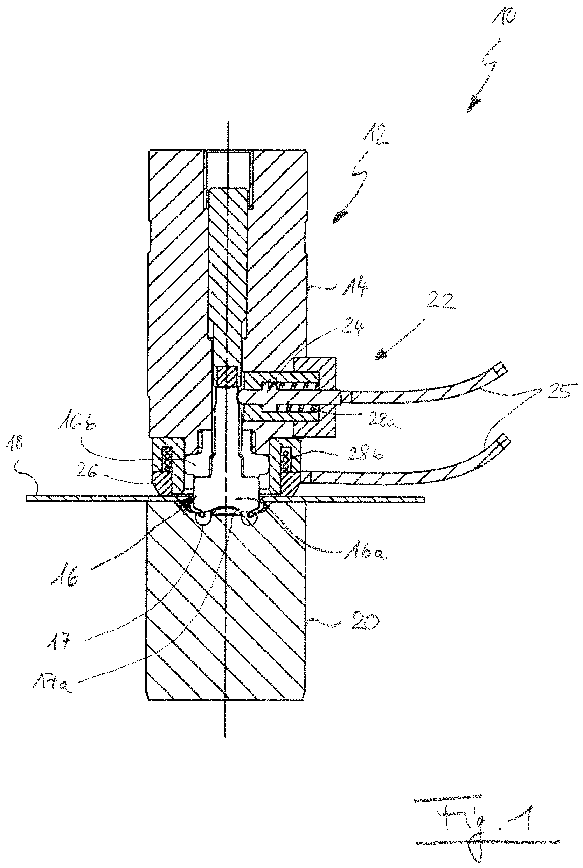

Fig. 1 zeigt eine Setzeinrichtung 10 mit einem Setzkopf 12, der einen Setzstempel 14 umfasst. Mit dem Setzstempel 14 wurde ein Funktionselement 16 an einem Blechbauteil 18, das auf einer Matrize 20 aufliegt, befestigt. Das Funktionselement 16 umfasst im dargestellten Ausführungsbeispiel ein Bolzenelement 16a, auf das ein Mutterelement 16b aufgeschraubt ist.

Der entsprechende Setzvorgang wird im Folgenden kurz erläutert:
Zusammen werden die Elemente 16a, 16b zunächst durch den an einer dem Blechbauteil 18 abgewandten Ringfläche des Mutterelements 16b angreifenden Setzstempel 14 gegen das Blechbauteil 18 gepresst. Ein Nietabschnitt 17 des Bolzenelements 16a dringt dabei durch das Blechbauteil 18, wobei er einen Butzen 17a heraustrennt. Im weiteren Verlauf der Setzbewegung wird der Nietabschnitt 17a durch eine entsprechende Formgebung der Matrize 20 nach außen umgebogen, sodass umgebogene Abschnitte des Nietabschnitts 17 das Blechbauteil 18 hintergreifen. Das Funktionselement 16 ist nun an dem Blechbauteil 18 gesichert.

Das Funktionselement 16 kann beispielsweise als Kontaktpunkt für einen Masseanschluss dienen. Ein solcher Masseanschluss kann mittels dem Mutterelement 16b an dem Bolzenelement 16a gehalten werden. In diesem Anwendungsfall ist es besonders wichtig, dass zwischen dem Funktionselement 16 und dem Werkstück 18, die aus elektrisch leitfähigen Material, insbesondere Metall, gefertigt sind, eine zuverlässige elektrisch leitfähige Verbindung hergestellt wird.

Um die Qualität der Verbindung zwischen den genannten Komponenten 16, 18 gleich "in-line" zu überprüfen, ist eine Überwachungseinrichtung mit einer Sensoreinheit 22 vorgesehen. Die Überwachungseinrichtung umfasst neben der Sensoreinheit 22 eine Steuer- oder Messeinheit (nicht gezeigt), die auch in eine Steuereinheit der Setzeinrichtung 10 integriert sein kann (ebenfalls nicht gezeigt). Die Sensoreinheit 22 umfasst einen Elementkontakt 24 und einen Werkstückkontakt 26, die über entsprechende Kabel 25 mit der Steuer- oder Messeinheit verbunden sind. Die Kontakte 24, 26 werden durch Federn 28a, 28b gegen das Funktionselement 16 bzw. gegen das Blechbauteil 18 gedrückt. Die Kontakte 24, 26 sind dabei gegenüber dem Setzkopf 12 elektrisch isoliert. Gleiches gilt für das Funktionselement 16 in Bezug auf den Setzstempel 14. Ebenso kann das Blechbauteil 18 gegenüber der Matrize 20 elektrisch isoliert sein. Eine geeignete elektrische Isolierung kann durch eine entsprechende Materialwahl der beteiligten Komponenten und/oder eine Beschichtung des Setzstempels 14 bzw. der Matrize 20 erreicht werden. Es ist auch möglich, elektrisch isolierende Hülsen oder andere Bauteile zwischen dem Setzkopf 14 und der Matrize 20 einerseits und dem Funktionselement 16 und/oder dem Blechbauteil 18 andererseits vorzusehen. Der Setzkopf 14 und/oder die Matrize 20 können auch (abschnittsweise) aus einem isolierenden Material gefertigt sein.

Durch die Federn 28a bzw. 28b, die jeweils vorgespannt sind, werden die Kontakte 24, 26 mit wohldefinierter Kraft gegen das Funktionselement 16 bzw. das Blechbauteil 18 gepresst, um eine reproduzierbare Kontaktierung herzustellen. Nach dem Abschluss der Setzbewegung wird der Setzstempel 14 entlastet, sodass nun erheblich weniger Kräfte auf das Funktionselement 16 und das Blechbauteil 18 wirken als während dem Setzvorgang selbst, um realitätsnah eine Qualität der Verbindung zwischen dem Funktionselement 16 und dem Blechbauteil 18 zu bestimmen. Bevorzugt wirken hierbei Kräfte von weniger als 500 Newton, bevorzugt weniger als 250 Newton, insbesondere Kräfte von etwa 100 Newton oder weniger auf die oder zwischen den genannten Komponenten.

Zur Bestimmung der Verbindungsqualität erfolgt einer Bestromung der Kontakte 24, 26, so dass zwischen dem Funktionselement 16 und dem Blechbauteil 18 ein Strom fließt, was es wiederum ermöglicht, den elektrischen Widerstand der Verbindung zu ermitteln. Dieser Parameter ist ein Maß für die Güte der Verbindung zwischen dem Funktionselement 16 und dem Blechbauteil 18.

Im vorliegenden Ausführungsbeispiel ist ein möglichst geringer elektrischer Widerstand erwünscht, da das Funktionselement 16 als Masseanschluss für ein Bauteil, beispielsweise ein Bauteil eines Kraftfahrzeugs, dienen soll.

Im Ausführungsbeispiel gemäß Fig. 1 wird der Elementkontakt 24 in radialer Richtung gegen einen Schaft des Funktionselements 16 gepresst.

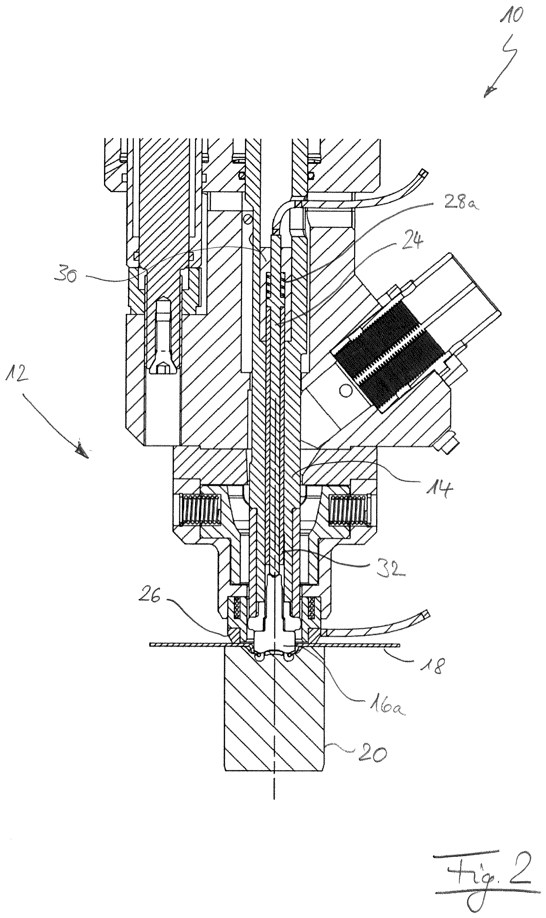

Bei dem Ausführungsbeispiel der Setzeinrichtung 10 gemäß Fig. 2 ist der Elementkontakt 24 ein vertikal angeordneter Stift, der in axialer Richtung gegen ein schaftseitiges Ende des Bolzenelements 16a gepresst wird. Die hierfür erforderliche Presskraft wird durch die senkrecht wirkende Feder 28a bereitgestellt, die sich an einem Abschlusselement 30 abstützt, das fest mit dem Setzstempel 14 verbunden ist. Zwischen dem Setzstempel 14 und dem Elementkontakt 24 ist eine isolierende Hülse 32 vorgesehen.

Der Werkstückkontakt 26 ist - wie bei der Ausführungsform gemäß Fig. 1 - dem Setzkopf 12 zugeordnet. Er weist eine ringförmige Grundform auf, sodass eine Kontaktfläche zwischen dem Werkstückkontakt 26 und dem Blechbauteil 18 das Funktionselement 16 bzw. den Bereich des Blechbauteils 18, an dem das Funktionselement 16 befestigt wird, umgibt. Der Werkstückkontakt 26 ist wiederum gegenüber den restlichen Komponenten des Setzkopfes 12 elektrisch isoliert und wird durch die Feder 28b gegen das Blechbauteil gedrückt.

Die Überprüfung der Qualität der Verbindung zwischen dem Element 16 und dem Bauteil 18 erfolgt wie vorstehend beschrieben.

Die weiteren Komponenten des Setzkopfes 10, insbesondere die Funktionsweise des Setzstempels 14 sowie Details einer Zuführung der Funktionselemente 16 sind hinlänglich bekannt und werden daher an dieser Stelle nicht eingehender erläutert.

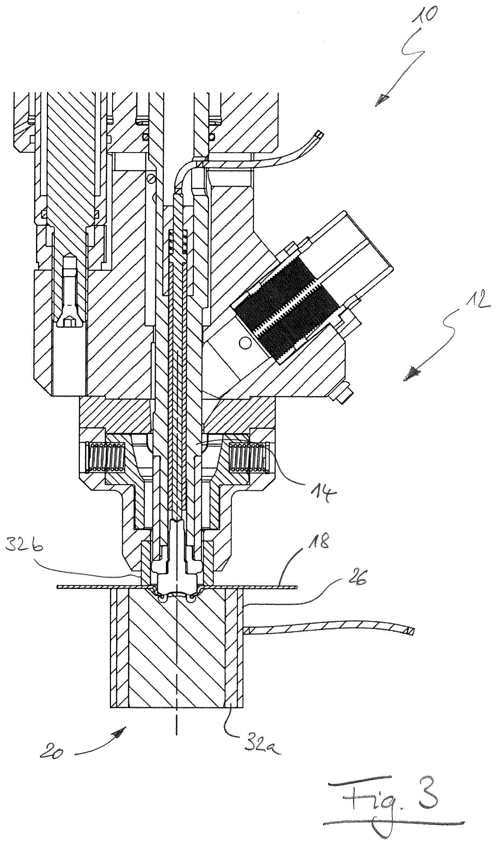

Das Ausführungsbeispiel der Setzeinrichtung 10 gemäß Fig. 3 unterscheidet sich von der Setzeinrichtung 10 gemäß Fig. 2 dadurch, dass der Werkstückkontakt 26 nicht dem Setzkopf 12 zugeordnet ist, sondern der Matrize 20. Der Kontakt 26 ist in diesem Fall ein Ring, der - isoliert durch eine Hülse 32a - die Matrize 20 umgibt. Der Werkstückkontakt 26 steht somit wie bei den Ausführungsbeispielen gemäß den Figuren 1 und 2 über eine ringförmige Kontaktfläche mit dem Blechbauteil 18 in Verbindung.

Nach dem eigentlichen Setzprozess werden wiederum die Kontakte 24 und 26 bestromt bzw. es wird eine Spannung angelegt und der elektrische Widerstand wird in analoger Weise wie vorstehend beschrieben bestimmt. Bei dem Ausführungsbeispiel gemäß Fig. 3 kann ein kraftgesteuerter Setzkopf 12 zum Einsatz gelangen. D.h. der Setzkopf 12 wird mit genau definierter Kraft gegen das Blechbauteil 18 gedrückt, sodass er nach dem Setzprozess eine Art Niederhalterfunktion ausübt. Dabei steht eine das Element 16 umgebende Hülse 32b des Setzkopfes 12 in ringförmigem Kontakt mit dem Blechbauteil 18. Die Hülse 32b kann ein Keramikbauteil sein.

Gleichermaßen kann der Setzstempel 14 mit einer vorbestimmten Kraft, die deutlich geringer als die zum Setzen des Funktionselements 16 erforderliche Kraft ist, beaufschlagt werden, um reproduzierbare Messbedingungen zu schaffen. Gleiches gilt für die Ausführungsform gemäß Fig. 2.

Aus den vorstehenden Ausführungen ist ersichtlich, dass sich die Überwachungseinrichtung mit dem Kontakt 24, 26 auf einfache Weise in bekannte Setzeinrichtungen integrieren lässt. Der Elementkontakt 24 kann zusammen mit einem nichtgezeigten weiteren Kontakt, der mit dem Element 16 kontaktierbar ist, bei geeigneter Ansteuerung auch als Sensor genutzt werden, mit dem überprüft werden kann, ob die Setzeinrichtung korrekter Weise mit einem Funktionselement 16 bestückt ist.

Die erfindungsgemäße Qualitätssicherung ermöglicht auf einfache Weise das Erkennen von fehlerhaften Setzprozessen. So können nicht nur einzelne minderwertige Verbindung zwischen einem Funktionselement 16 und dem Blechbauteil 18 erkannt werden, sondern es lässt sich u.U. auch ein Verschleiß der Setzeinrichtung erkennen. Die von der Überprüfungseinrichtung ermittelten Daten können zu Dokumentationszwecken gespeichert werden.

### Bezugszeichenliste

- 10: Setzeinrichtung
- 12: Setzkopf
- 14: Setzstempel
- 16: Funktionselement
- 16a: Bolzenelement
- 16b: Mutterelement
- 17: Nietabschnitt
- 17a: Butzen
- 18: Blechbauteil
- 20: Matrize
- 22: Sensoreinheit
- 24: Elementkontakt
- 25: Kabel
- 26: Werkstückkontakt
- 28a, 28b: Feder
- 30: Abschlusselement
- 32, 32a, 32b: Hülse

## Patentansprüche

1. Setzeinrichtung zur Befestigung eines Funktionselements (16) an einem Werkstück (18), insbesondere an einem Blechbauteil, umfassend:
eine Matrize (20) zur Aufnahme und Abstützung des Werkstücks,
einen Setzkopf (12) mit einem mit dem Funktionselement zusammenwirkenden Setzstempel (14), durch den das Funktionselement in
einer axialen Setzbewegung an dem Werkstück befestigbar ist,
wobei die Setzeinrichtung eine Überprüfungseinrichtung zur Bestimmung der Qualität einer Verbindung des Funktionselements mit dem Werkstück umfasst, wobei die Überprüfungseinrichtung eine Sensoreinheit (22) mit einem ersten Kontaktabschnitt (24), der elektrisch leitend mit dem Funktionselement kontaktierbar ist, und mit einem zweiten Kontaktabschnitt (26), der elektrisch leitend mit dem Werkstück kontaktierbar ist, aufweist.

2. Setzeinrichtung nach Anspruch 1,
wobei der zweite Kontaktabschnitt (26) an dem Setzkopf (12) angeordnet ist.

3. Setzeinrichtung nach Anspruch 1 oder 2,
wobei der zweite Kontaktabschnitt (26) an der Matrize (20) angeordnet ist.

4. Setzeinrichtung nach einem der vorstehenden Ansprüche,
wobei der erste Kontaktabschnitt (24) mit einer vorbestimmten Kraft gegen das Funktionselement (16) pressbar ist und/oder wobei der zweite Kontaktabschnitt (26) mit einer vorbestimmten Kraft gegen das Werkstück (18) pressbar ist.

5. Setzeinrichtung nach einem der vorstehenden Ansprüche,
wobei eine erste Vorspanneinrichtung mit einem Vorspannelement (28a) vorgesehen ist, das sich an dem Setzkopf (12) abstützt und mit dem der erste Kontaktabschnitt (24) gegen das Funktionselement pressbar ist.

6. Setzeinrichtung nach einem der vorstehenden Ansprüche,
wobei eine zweite Vorspanneinrichtung mit einem Vorspannelement (28b) vorgesehen ist, das sich an dem Setzkopf (12) oder der Matrize (20) abstützt und mit dem der zweite Kontaktabschnitt (26) gegen das Werkstück pressbar ist.

7. Setzeinrichtung nach einem der vorstehenden Ansprüche,
wobei der erste Kontaktabschnitt (24) in Richtung der Setzbewegung mit dem Funktionselement (16) kontaktierbar ist.

8. Setzeinrichtung nach einem der vorstehenden Ansprüche,
wobei der zweite Kontaktabschnitt (26) eine ringförmige Kontaktfläche aufweist, die mit dem Werkstück (18) in Kontakt bringbar ist, insbesondere wobei die Kontaktfläche eine Achse der Setzbewegung umgibt.

9. Setzeinrichtung nach einem der vorstehenden Ansprüche,
wobei die Matrize (20) einen Umformabschnitt zum Umformen eines Abschnitts des Funktionselements (16) aufweist.

10. Setzeinrichtung nach einem der vorstehenden Ansprüche,
wobei die Setzeinrichtung zur Befestigung eines selbststanzenden Funktionselements (16) ausgebildet und eingerichtet ist.

11. Verfahren zum Befestigen eines Funktionselements (16) an einem Werkstück (18), insbesondere an einem Blechbauteil,
wobei das Funktionselement mittels einer Setzeinrichtung (10), insbesondere mittels einer Setzeinrichtung gemäß zumindest einem der vorstehenden Ansprüche, in das Werkstück eingebracht und daran fixiert wird, insbesondere wobei zum Fixieren des Funktionselements (16) ein Abschnitt des Funktionselements umgeformt wird,
wobei die Setzeinrichtung eine Überprüfungseinrichtung zur Bestimmung der Qualität einer Verbindung des Funktionselements mit dem Werkstück umfasst und
wobei nach dem Fixieren des Funktionselements an dem Werkstück mittels der Überprüfungseinrichtung, die eine Sensoreinheit (22) mit einem ersten Kontaktabschnitt (24), der elektrisch leitend mit dem Funktionselement in Kontakt gebracht wird, und mit einem zweiten Kontaktabschnitt (26), der elektrisch leitend mit dem Werkstück in Kontakt gebracht wird, umfasst und mit der ein elektrischer Parameter bestimmt wird, der ein Maß für eine Qualität der Verbindung des Funktionselements mit dem Werkstück ist.

12. Verfahren nach Anspruch 11,
wobei der erste Kontaktabschnitt (24) vor dem Einbringen des Funktionselements (16) in das Werkstück (18) mit dem Funktionselement elektrisch leitend kontaktiert wird, insbesondere bevor ein Setzkopf (12) der Setzeinrichtung mit dem Werkstück in mechanischen Kontakt gebracht wurde, und/oder wobei der zweite Kontaktabschnitt (26) vor dem Einbringen des Funktionselement in das Werkstück mit dem Werkstück elektrisch leitend kontaktiert wird, insbesondere bevor ein Setzkopf der Setzeinrichtung mit dem Werkstück in mechanischen Kontakt gebracht wurde oder indem der Setzkopf der Setzeinrichtung mit dem Werkstück in mechanischen Kontakt gebracht wird.

13. Verfahren nach Anspruch 11 oder 12,
wobei der elektrische Parameter ein elektrischer Widerstand ist, der insbesondere durch eine Strommessung und/oder Spannungsmessung ermittelt wird.

14. Verfahren nach Anspruch 11, 12 oder 13,
wobei das Funktionselement (16) während der Bestimmung des elektrischen Parameters mit einer vorbestimmten Kraft beaufschlagt wird, die insbesondere kleiner ist als eine Setzkraft, die zum Einbringen und Fixieren des Funktionselements aufgebracht wird und/oder wobei das Werkstück (18) während der Bestimmung des elektrischen Parameters mit einer vorbestimmten Kraft beaufschlagt wird, die insbesondere kleiner ist als eine Setzkraft, die zum Einbringen und Fixieren des Funktionselements aufgebracht wird.

15. Verfahren nach Anspruch 14,
wobei der elektrische Parameter bestimmt wird, wenn eine Belastung der Verbindung zwischen dem Funktionselement (16) und dem Werkstück (18) kleiner ist als die zwischen dem Funktionselement und dem Werkstück wirkenden Kräfte beim Einbringen und/oder Fixieren des Funktionselements.
